# DEMANDE DE BREVET EUROPEEN

(11) **EP 0 969 241 A1**
(43) Date de publication de la demande: **05.01.2000**
(21) Numéro de dépôt: 99401576.6
(22) Date de dépôt: 24.06.1999
(51) Int. Cl.: F16M 11/04, A61G 12/00

(54) **Ensemble constitué d'une structure-porteuse et d'un chariot de transport de matériel**

(30) Priorité: 01.07.1998 FR 9808400
(71) Demandeur: ALM, 45160 Ardon (FR)
(72) Inventeur: Mazabrey, Igor, 78120 Rambouillet (FR); Marchese, Christophe, 45190 Orleans (FR)
(74) Mandataire: Le Moenner, Gabriel

(57) **Abrégé**

Ensemble structure-porteuse/chariot (C) de transport comprenant une structure-porteuse (S), tel un statif de plafond destiné à une salle de soins de bâtiment hospitalier, comprenant au moins un bras (2) muni d'une ou plusieurs colonnes (3) verticales et des moyens de fixation (1) permettant la fixation de ladite structure (S) au plafond ou à un mur ; un chariot (C) mobile de transport portant des moyens d'accrochage (31), lesquels coopèrent avec des moyens de réception (32) portés par une colonne (3) pour permettre une fixation du chariot (C) à la colonne (3) ; et des moyens de levage (33) aussi portés par ledit chariot (C) susceptibles de permettre un levage d'au moins une partie dudit chariot (C) après fixation de celui-ci à la colonne (3).

## Description

La présente invention se rapporte à un ensemble formé, d'une part, d'un chariot mobile destiné à transporter des matériels médicaux ou analogues et, d'autre part, d'une structure-porteuse d'accrochage pouvant être fixée à un plafond ou à un mur, par exemple un statif de plafond pour l'hôpital, à un ou plusieurs bras articulés ou non, comportant au moins une colonne dotée de moyens de fixation dudit chariot.

Les structures porteuses, en particulier les statifs de plafond à un ou plusieurs bras articulés ou non, sont couramment utilisées dans les établissements hospitaliers, en particulier, dans les salles d'opérations, d'anesthésie ou de soins, où ces structures sont généralement fixées au plafond, de manière à surplomber les tables d'opération ou les lits où sont installés les patients.

Classiquement, ces statifs de plafond ou analogues remplissent plusieurs fonctions, à savoir:
- ils supportent tout ou partie des équipements et appareils mis en oeuvre durant les soins;
- ils assurent des fonctions de rangement d'une partie des matériels;
- étant généralement articulés et supportant les appareils, ils permettent un déplacement facile et modulable de ceux-ci, autour du lit ou de la table d'opération;
- ils renferment l'ensemble des conduites acheminant les gaz ou les fluides médicaux, ainsi que les câbles d'alimentation électrique des appareils de soins.

Habituellement, un statif de plafond comprend au moins un élément de base destiné à être fixé au plafond ou au mur, sur lequel est monté un ou plusieurs bras de statif pouvant être articulés ou non audit élément de base, lesquels bras de statif peuvent être formés de plusieurs sous-parties articulées entre elles.

En général, un bras de statif, articulé ou non, comporte une colonne d'axe vertical sur laquelle sont fixés à demeure des éléments supports permettant de recevoir des appareils de soins, des plateaux ou autres éléments de rangement de matériels médicaux ou analogues.

On peut citer, par exemple, le cas de dispositifs existant comportant à l'extrémité inférieure de leur colonne d'axe vertical une sorte de nacelle munie de tiroirs, de tablettes et autres accessoires de rangement.

De tels dispositifs sont notamment décrits par les documents EP-A-0257299, EP-A-0614035, EP-A-0614036, EP-A-0614037, WO-A-94/29636, EP-A-0681822, EP-A-0603093, WO-A-94/27549 ou GB-A-2083878.

Cependant, les statifs de plafond décrits dans l'art antérieur présentent certains inconvénients.

Ainsi, les dispositifs existants comportent habituellement une ou des colonnes sur lesquelles les différents éléments supports sont soit fixés à demeure, c'est-à-dire de façon inamovible, soit de sorte à ne pouvoir être réarrangés les uns par rapport aux autres qu'au prix de nombreuses manipulations, tels un démontage puis remontage subséquent desdits supports sur la colonne, lesquelles manipulations s'accompagnent, en général, de l'obligation de déconnecter et déplacer tous les appareillages agencés sur lesdits éléments supports.

On comprend aisément que de telles manipulations sont, d'une part, fastidieuses et pénibles et, d'autre part, inadmissibles, compte tenu de la perte de temps qu'elles occasionnent, du risque de détérioration des appareils de soins et de la complexité de branchement des différents appareils entre eux.

Une solution partielle à ce problème est apportée par les documents US-A-4,993,683 et US-A-5,040,765 qui décrivent un système constitué, d'une part, d'un statif de plafond muni d'une colonne d'axe vertical et, d'autre part, d'un chariot mobile de transport de matériels médicaux, muni de roulettes permettant son déplacement. La colonne est équipée de moyens à rails parallèles permettant de recevoir le chariot mobile et de le soulever selon un mouvement ascendant pour le décoller du sol. La manipulation des appareils médicaux s'en trouve alors facilitée, étant donné que ce dispositif permet d'éviter tout déplacement fastidieux d'appareil ; les appareils et/ou autres matériels étant directement posés sur le chariot.

Toutefois, le système de levage proposé par ces documents est plutôt complexe, étant donné qu'il met en oeuvre des rails mobiles en translation et en rotation actionnés par des engrenages et des manivelles agencés sur la colonne.

En outre, ce système présente l'inconvénient d'un encombrement important, surtout en l'absence de chariot, difficilement compatible avec une utilisation en milieu hospitalier, de par la présence notamment des rails et des supports de rails susceptibles de constituer de véritables "nids" à poussière et à microbes.

Le but de la présente invention est alors de proposer un ensemble constitué, d'une part, d'une structure-porteuse pouvant être fixée à un plafond ou à un mur, en particulier d'un statif de plafond, d'autre part, d'un chariot de transport mobile, susceptible de recevoir des appareils et/ou des supports à matériels hospitaliers, ne présentant pas les inconvénients susmentionnés, c'est-à-dire permettant une fixation et un décrochage aisés du chariot sur la colonne d'axe vertical du statif, c'est-à-dire de ladite structure-porteuse.

En outre, selon l'invention, les moyens permettant de désolidariser le chariot de transport du sol du bâtiment hospitalier, de manière à le rendre solidaire du statif, doivent être de fonctionnement simple et d'encombrement réduit.

Dans le cadre de la présente invention, le chariot de transport mobile est muni d'un ou plusieurs éléments-supports, c'est-à-dire de moyens permettant de supporter la charge d'un matériel, tels un plateau, une paterne, une nacelle, une étagère, une rampe, un tiroir...

La présente invention concerne alors un ensemble structure-porteuse/chariot de transport comprenant:
- une structure-porteuse d'accrochage, tel un statif de plafond, destinée à être fixée à un plafond ou à un mur comprenant au moins un bras muni d'au moins une colonne d'axe vertical (x-x') et des moyens de fixation permettant la fixation de ladite structure-porteuse à un plafond ou à un mur,
- un chariot mobile de transport,
- des moyens d'accrochage portés par ledit chariot coopérant avec des moyens de réception portés par ladite colonne et susceptibles de permettre une fixation et une solidarisation du chariot à ladite colonne, et
- des moyens de levage portés par ledit chariot susceptibles de permettre au moins un levage d'au moins une partie du chariot après fixation dudit chariot à la colonne.

Dans le cadre de la présente, invention, on entend par levage du chariot, une opération permettant de soulever au moins une partie du chariot, de manière à ce que le chariot ne soit plus en contact direct avec le sol.

Par structure-porteuse d'accrochage, tel un statif de plafond, à bras articulé ou non, on entend que la structure est dotée d'au moins un bras, qui est soit articulé à un élément de base fixé au plafond ou à un mur, soit fixé à demeure audit élément de base.

De là, l'ensemble bras/élément de base peut alors être formé d'une partie unique ou de plusieurs parties reliées entre elles, et étant articulées ou non les unes part rapport aux autres.

En d'autres termes, une structure-porteuse, tel un statif, ayant au moins une colonne fixée directement à l'élément de base entre également dans le cadre de la présente invention car, dans ce cas, le bras et l'élément de base ne font qu'un, c'est-à-dire forment une partie unique.

L'ensemble de l'invention peut comprendre l'une ou plusieurs des caractéristiques suivantes:
- le chariot mobile comprend plusieurs roulettes, de préférence au moins 4 roulettes;
- le chariot comprend, en outre, des moyens-supports, de préférence des plateaux, des étagères ou analogues, lesdits moyens-supports étant fixés à au moins une colonne-chariot portée par ledit chariot;
- le chariot comprend, en outre, des moyens de maintien agencés sur la colonne-chariot permettant de maintenir le chariot en appui contre la colonne au moins lorsque le chariot est accroché à ladite colonne et est soulevé du sol;
- la colonne est sensiblement cylindrique et les moyens de maintien sont pourvus d'une surface d'appui venant en contact avec la colonne;
- les moyens d'accrochage comportent au moins un crochet d'accrochage, de préférence au moins deux crochets d'accrochage;
- les moyens de réception fixés à la colonne comprennent au moins une, de préférence, au moins deux broches d'accrochage, au moins une broche d'accrochage étant susceptible de coopérer avec au moins un crochet porté par ledit chariot.

De préférence, la colonne est de forme sensiblement cylindrique ou polygonale et/ou est réalisée en un matériau choisi dans le groupe formé par les métaux, les alliages de métaux et les polymères.

En outre, le statif de plafond comprend un ou deux bras de statif comportant chacun une colonne.

L'invention concerne, en outre, un chariot de transport mobile susceptible d'équiper un ensemble selon l'invention, lequel comporte des roulettes permettant le déplacement dudit chariot sur le sol, des moyens d'accrochage susceptible de permettre la fixation du chariot à une colonne d'une structure d'accrochage et des moyens de levage susceptible de permettre le levage du chariot lorsque celui-ci est accroché à la colonne.

Par ailleurs, pour fixer ou accrocher un chariot à une structure-porteuse fixée à un plafond, tel un statif de plafond, et comprenant au moins un bras muni d'au moins une colonne d'axe vertical (x-x') et des moyens de fixation, on procède comme suit:
- on amène le chariot de transport mobile au contact ou à proximité immédiate de la colonne,
- on fixe, c'est-à-dire qu'on accroche, les moyens d'accrochage portés par ledit chariot à des moyens de réception agencés sur ladite colonne, de manière à faire coopérer les moyens d'accrochage avec lesdits moyens de réception,
- on opère un levage du chariot par actionnement des moyens de levage, de manière à soulever au moins une partie dudit chariot.

Selon encore un autre aspect, l'invention a trait aussi à l'utilisation d'un ensemble structure-porteuse/chariot, en particulier un ensemble statif de plafond/chariot selon l'invention dans un bâtiment hospitalier, de préférence dans une salle de soins.

L'invention va maintenant être décrite plus en détail à l'aide de figures données à titre illustratif, mais nullement limitatif.

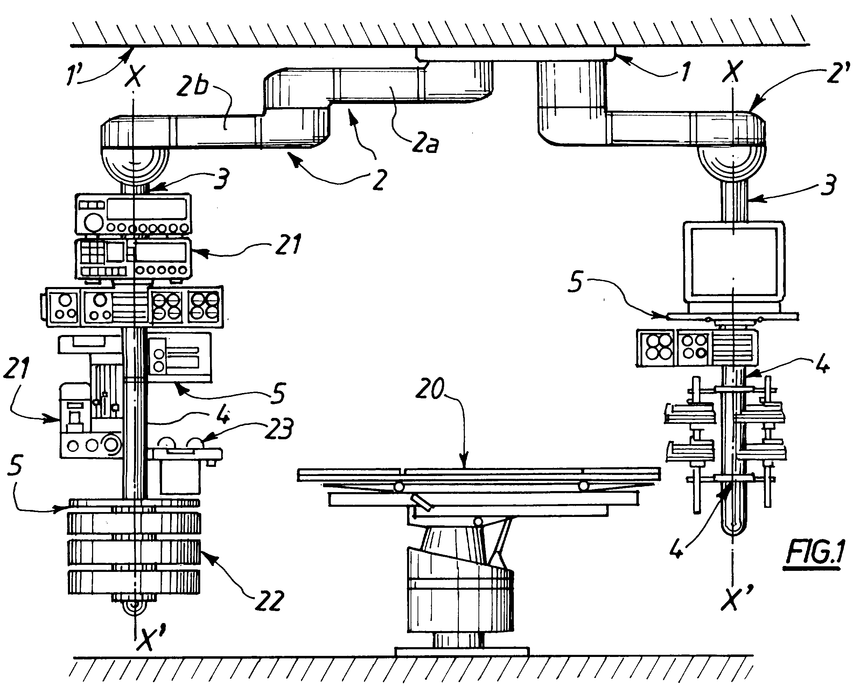

La figure 1 représente un schéma classique d'un statif de plafond installé dans une salle de soins intensifs en milieu hospitalier.

Plus précisément, la figure 1 représente un statif de plafond comportant un élément de base 1 fixé à un plafond 1' d'une salle de soins intensifs en milieu hospitalier, à l'aplomb d'un support de soins intensifs 20, par exemple une table d'opération.

Ce statif comporte deux bras de statif 2 et 2' pouvant être articulés audit élément de base 1. Le bras de statif 2 comporte lui-même deux sous-parties 2a et 2b, s'articulant l'une par rapport à l'autre, et donnant plus de flexibilité à l'ensemble. Les deux bras 2 et 2' sont tous les deux munis à leur extrémité d'une colonne 3 d'axe vertical (x-x') et de longueur α.

Des éléments supports 5 sont fixés sur ces colonnes 3 par l'intermédiaire de moyens de fixation 4, lesquels moyens de fixation 4 sont déplaçables en translation selon l'axe (x-x') et en rotation autour dudit axe (x-x'), à volonté ou selon les besoins, et ce par des manipulations très simples, tel que décrit notamment dans les documents FR-A-2408089 où FR 9702025.

A titre d'exemple, les appareils de soins 21, du matériel médical 23 et un élément à tiroir 22 ont été disposés sur lesdits éléments supports 5.

On comprend que ce type de statif de plafond est suffisant et adapté lorsque les éléments-supports 5 sont destinés à recevoir des appareillages ou des matériels nécessitant des déplacements peu fréquents ou uniquement en rotation autour de la colonne 3 ou selon l'axe (x-x') de ladite colonne, et ce, pour répondre à des contraintes ou exigences techniques ou thérapeutiques.

Cependant, ce type de statif de plafond est insuffisant lorsque les appareillages ou les matériels doivent subir des déplacements fréquents d'une salle de soins à une autre salle de soins, a fortiori, lorsqu'il s'agit d'appareillages lourds à déplacer ou, au contraire, très fragiles, mais devant, dans un cas comme dans l'autre, être manipulés le moins souvent possible pour ne pas risquer de détériorer le matériel ou de blesser le personnel hospitalier.

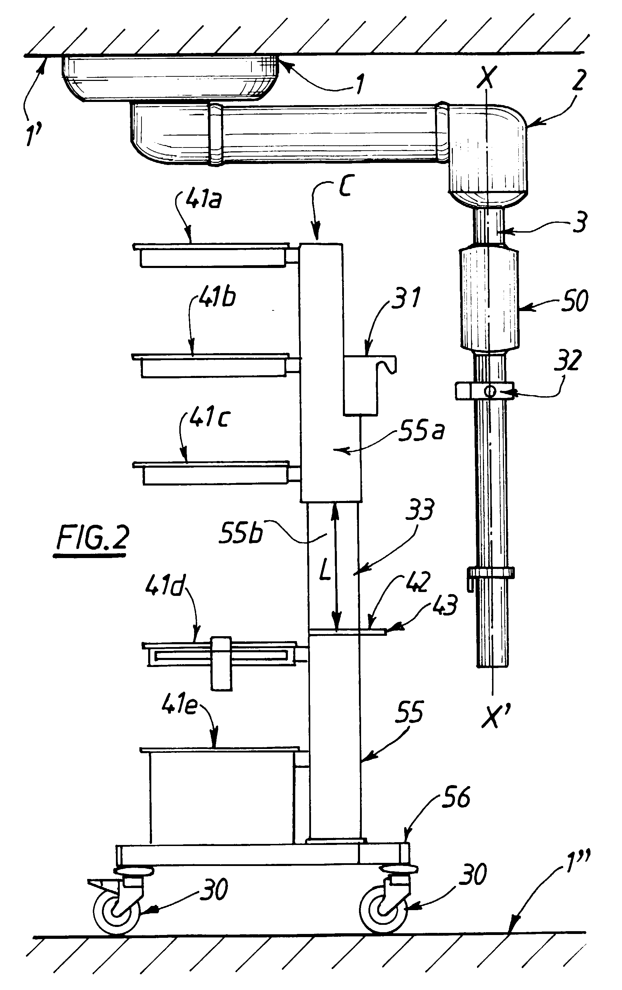

Les figures 2 à 5 proposent, quant à elles, une solution permettant de résoudre ces problèmes.

Plus précisément, les figures 2 à 5 représentent un ensemble constitué, d'une part, d'un statif de plafond S et, d'autre part, d'un chariot de transport C de matériels, par exemple de matériels et appareillages hospitaliers.

Le statif S de plafond comporte un bras 2 articulé sur une base 1 reliée au plafond 1' d'une salle d'un bâtiment hospitalier, telle une salle de soins intensifs.

Le bras 2 porte une colonne 3 d'axe vertical (x-x') sensiblement cylindrique, sur laquelle sont agencés des moyens de réception 32 dont la fonction sera détaillée ci-après.

La colonne 3 peut comporter, en outre, des étagères ou un module de distribution 50 de fluides médicaux et/ou d'électricité, tel que décrit dans l'art antérieur.

Par ailleurs, le chariot C comprend une colonne-chariot 55 sur laquelle sont agencés des moyens-supports 41 à 41e, telles des étagères, des tiroirs ou analogues.

Le déplacement du chariot C sur le sol 1" de la salle de soins se fait grâce à des roulettes 30 portées par le fond 56 du chariot C, sur lequel est fixée la colonne-chariot 55.

Le chariot C comprend, en outre, des moyens d'accrochage 31 permettant de fixer le chariot à la colonne 3 du support S. Plus précisément, lesdits moyens d'accrochage 31 viennent coopérer avec les moyens de réception 32 agencés sur la colonne 3 du statif S, de manière à obtenir un arrimage efficace, simple et rapide du chariot sur ladite colonne 3 du statif fixé au plafond.

Le chariot C comporte également, à l'arrière de la colonne-chariot 55, des moyens de maintien 42 dotés d'une surface d'appui 43 venant en contact avec la colonne 3 de statif, lorsque le chariot est arrimé à ladite colonne 3 de statif.

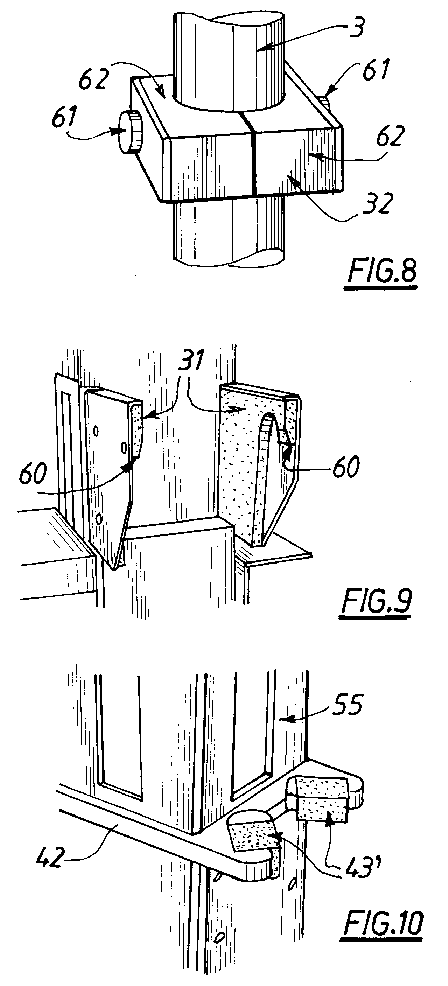

De préférence, la surface d'appui 43 a un profil en "V" dont l'écartement correspond sensiblement au profil de la colonne 3 ou est supérieur à celui-ci, comme montré sur la figure 10.

Après arrimage du chariot C sur la colonne 3, des moyens de levage 33 portés par le chariot autorisent un levage par translation verticale du chariot, de manière à désolidariser le chariot du sol 1" de la salle de soins.

Plus précisément, la colonne-chariot 55 est formée de plusieurs éléments (non-détaillés) coopérant entre eux, de manière à permettre le levage du chariot C après sa fixation sur la colonne 3 du statif.

Ainsi, la colonne-chariot 55 est formée de plusieurs, de préférence 2 ou 3, sous-parties qui s'emboîtent et coulissent -les unes dans les autres, c'est-à-dire d'une manière télescopique. En d'autres termes, ces sous-parties entrent ou sortent en coulissant les unes dans les autres par l'action d'un entraînement linéaire intégré.

Le mouvement télescopique de ces sous-parties est assuré par un moteur électrique, par exemple un moteur à arbre creux, dont le mouvement de rotation est transformé en mouvement linéaire par un système adapté, tel un système vis/écrou.

La commande du mouvement de translation peut être assurée soit électriquement, par exemple au moyen de commutateurs externes, soit pneumatiquement.

De tels éléments sont couramment accessibles dans le commerce, notamment auprès de la Société MAGNETIC ANTRIEBTECHNIK sous la dénomination TELEMAG.

Un tel ensemble unitaire constitué par le statif de plafond portant le chariot de transport de matériels médicaux présente de nombreux avantages, tels notamment de permettre un déplacement aisé du chariot dans la salle, lorsque celui-ci est chargé d'appareils lourd et/ou fragiles à déplacer, par l'intermédiaire d'un simple déplacement du bras du statif supportant tout le poids du chariot.

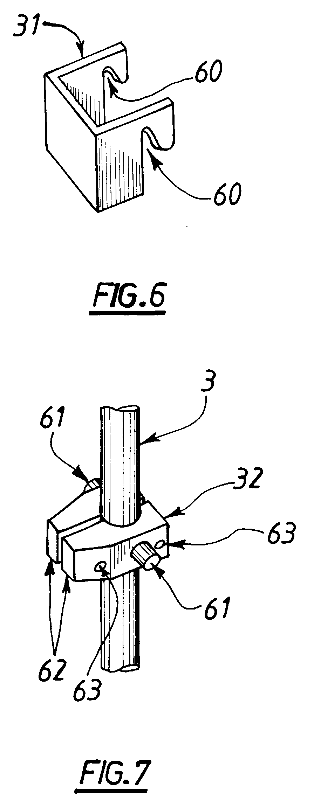

Par ailleurs, les moyens d'accrochage 31 et les moyens de réception 32 sont détaillés sur les figures 6 et 9, et 7 et 8, respectivement.

Ainsi, les figures 6 et 9 représentent les moyens d'accrochage 31 portés par la colonne-chariot 55.

Ces moyens d'accrochage 31 comportent deux crochets 60 d'arrimage, lesquels crochets 60 sont susceptibles de venir coopérer avec les moyens de réception 32 portés par la colonne 3 du statif et, en particulier, avec deux broches 61 d'accrochage portées chacune par une demi-pièce 62 de centrage.

En fait, les deux demi-pièces de centrage 62 sont maintenues en position sur- la colonne 3 du statif au moyen de plusieurs vis d'assemblage 63 assurant, d'une part, la réunion des deux demi-pièces 62 entre elles et, d'autre part, le serrage desdites deux demi-pièces 62 sur ladite colonne 3 de statif.

Lors de l'arrimage du chariot sur le statif, les crochets 60 viennent s'accrocher aux broches 61 d'accrochage et le chariot est ensuite soulevé du sol grâce à l'opération d'emboîtant télescopique des sous-parties 55a et 55b de la colonne-chariot 55, les unes dans les autres.

En fait, on comprend aisément qu'après accrochage du chariot sur la colonne du statif par l'intermédiaire des moyens d'accrochage 31 et des moyens de réception 32, le levage du chariot, c'est-à-dire son décollement du sol, est obtenu par retrait par translation linéaire verticale d'uniquement la partie inférieure du chariot, c'est-à-dire de la sous-partie 55b, et de tous les autres éléments situés en dessous de cette sous-partie 55b, notamment de l'embase 56 et des roulettes 30.

Afin d'améliorer le transfert et l'accrochage du chariot à la colonne 3 de statif, il convient d'améliorer le positionnement du chariot par rapport à la colonne 3 et donc aussi celui des moyens d'accrochage 31 du chariot par rapport aux moyens de réception 32 de la colonne 3.

Pour ce faire, il est préférable que les broches 61 d'accrochage soient mobiles en rotation autour de leur axe, c'est-à-dire que ces broches 61 d'accrochage soient des galets tournants ou rotatifs, comme montré sur les figures 7 et 8.

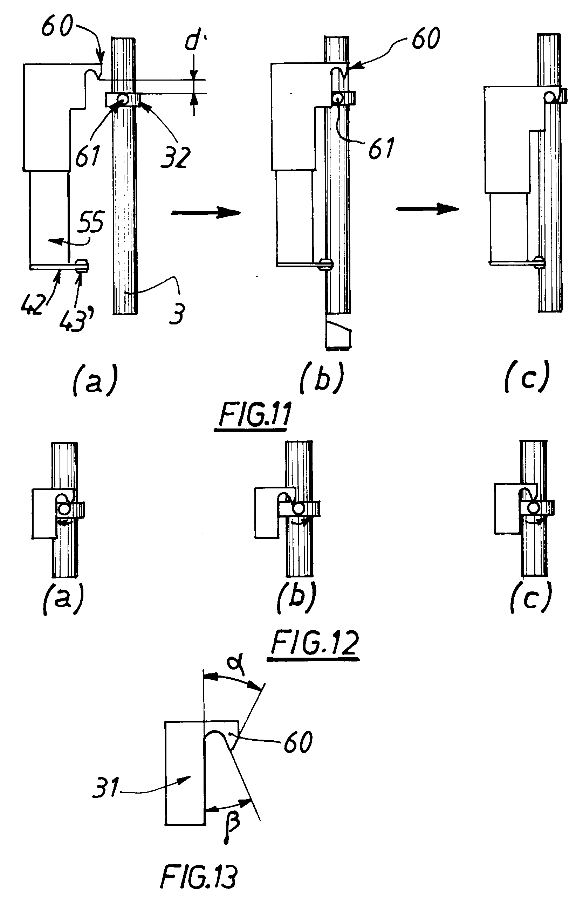

En effet, comme expliqué ci-avant et schématisé sur la figure 11, le chariot, après arrimage à la colonne 3, vient prendre appui sur ladite colonne par le biais de moyens de maintien 42 qui ont une surface d'appui 43 à profil en "V".

Comme montré sur la figure 10, les moyens de maintien 42 comportent un ou plusieurs patins de glissement 43' portés par la surface d'appui 43 à profil en "V".

Lorsque l'on souhaite fixer le chariot à la colonne, on procède comme expliqué ci-dessus et comme schématisé sur les figures lla à llb, c'est-à-dire que :
- l'on actionne le système de montée/descente de façon à positionner correctement les moyens d'accrochage 31 à crochets 60 d'arrimage par rapport aux broches 61 d'accrochage des moyens de réception 32. Durant cette étape, on voit sur la figure lla que les crochets 60 d'arrimage sont espacés verticalement d'une distance d par rapport aux broches 61 ou galets d'arrimage.
- ensuite, on approche le chariot de la colonne jusqu'au contact, c'est-à-dire jusqu'à ce que les patins de glissement 43' portés par la surface d'appui 43 à profil en "V" desdits moyens de maintien 42 viennent prendre appui ou entrent en contact avec l'axe vertical de la colonne 3, comme montré sur la figure llb. De cette façon, les crochets 60 et les broches 61 se retrouvent en position correcte les uns par rapport aux autres.
- enfin, on actionne le système de montée/descente à l'inverse de la première manipulation, ce qui engendre une descente des crochets 60 d'arrimage qui viennent en contact avec les galets ou broches 61 et s'y accroche, comme montré sur la figure 11c, ce qui permet ensuite de relever le chariot et donc de la décoller du sol.

En utilisant préférentiellement des galets ou broches 61 rotatifs, comme évoqué ci-dessus, on améliore le système car, comme schématisé sur les figures 12a à 12c, lorsque :
- les crochets 60 d'arrimage sont passés derrière l'axe des galets ou broches 61, lesdits crochets 60 peuvent s'accrocher correctement aux galets 61, étant donné que les surfaces en pente intérieures desdits crochets engendrent une rotation des galets 61 dans le sens des aiguilles d'une montre et l'arrimage peut se faire efficacement (cas de la figure 12a).
- les crochets 60 d'arrimage sont devant l'axe des galets ou broches 61, lesdits crochets 60 ne peuvent s'accrocher aux galets 61, étant donné que les surfaces en pente extérieures desdits crochets engendrent une rotation des galets 61 dans le sens inverse des aiguilles d'une montre. Dès lors, l'arrimage du chariot ne peut se faire, celui-ci reste donc sur le sol, et il faut alors que l'opérateur repositionne correctement le chariot par rapport à la colonne (cas de la figure 12b).
- les crochets 60 d'arrimage s'accrochent au niveau de l'axe des galets ou broches 61 (cas de la figure 12a), alors soit il se produit une rotation dans le sens horaire, comme dans le cas de la figure 12a et le chariot s'arrime correctement, soit, au contraire, lesdits crochets 60 ne peuvent s'accrocher correctement aux galets 61, comme dans le cas de la figure 12b et le chariot reste alors sur le sol et doit être repositionné pour pouvoir être soulevé.

Dans tous les cas, en procédant ainsi, il n'y a quasiment aucun risque de chute du chariot par décrochage accidentel car soit il est correctement positionné et il reste alors fermement fixé à la colonne 3, soit il est mal arrimé et, dans ce cas, les galets 61 entrent en rotation et empêchent alors que le chariot puisse être levé ainsi.

De préférence, la forme des galets 61 et des crochets 60 est choisie pour assurer un équilibre instable pour le cas de la figure 12c, pour résister aux efforts de matage lors du contact chariot/colonne et pour embarquer ou, à l'inverse, chasser le chariot en douceur.

Par exemple, les galets 61 rotatifs peuvent avoir un diamètre de 15 à 60 mm, de préférence de l'ordre de 35 mm.

En outre, comme montré sur la figure 13, les crochets 60 peuvent avoir des pentes interne et externe formant avec l'axe de la colonne 3, des angles α et β compris entre 15° et 60°, de préférence des angles α et β de l'ordre de 25° à 30°.

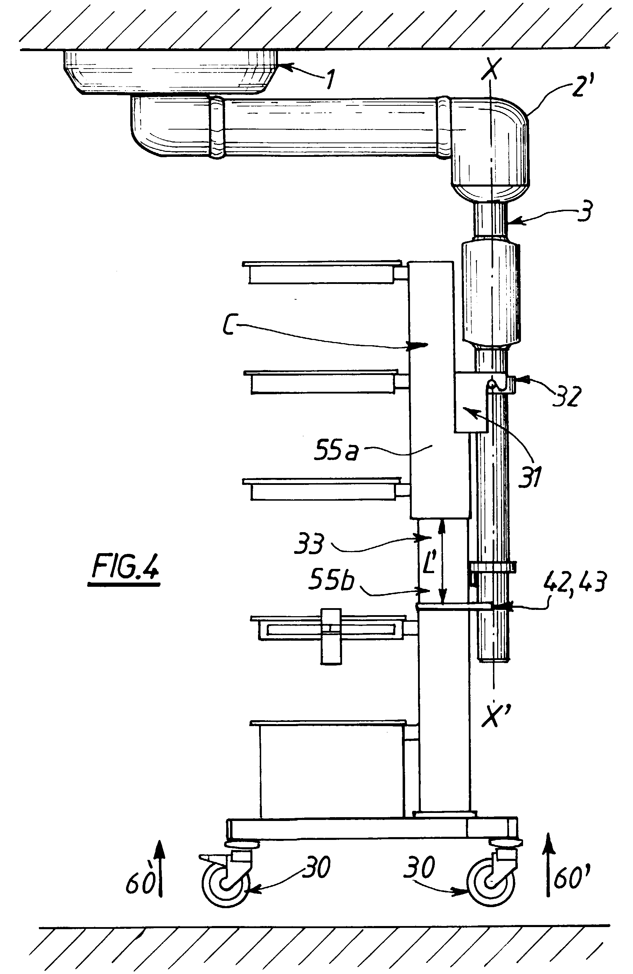

Sur la figure 2, le chariot C, représenté en vue de côté, est encore posé sur le sol 1" de la salle. Par contre, sur la figure 4, on a représenté le chariot C arrimé à la colonne 3 et après levage des roulettes 30 (flèches 60').

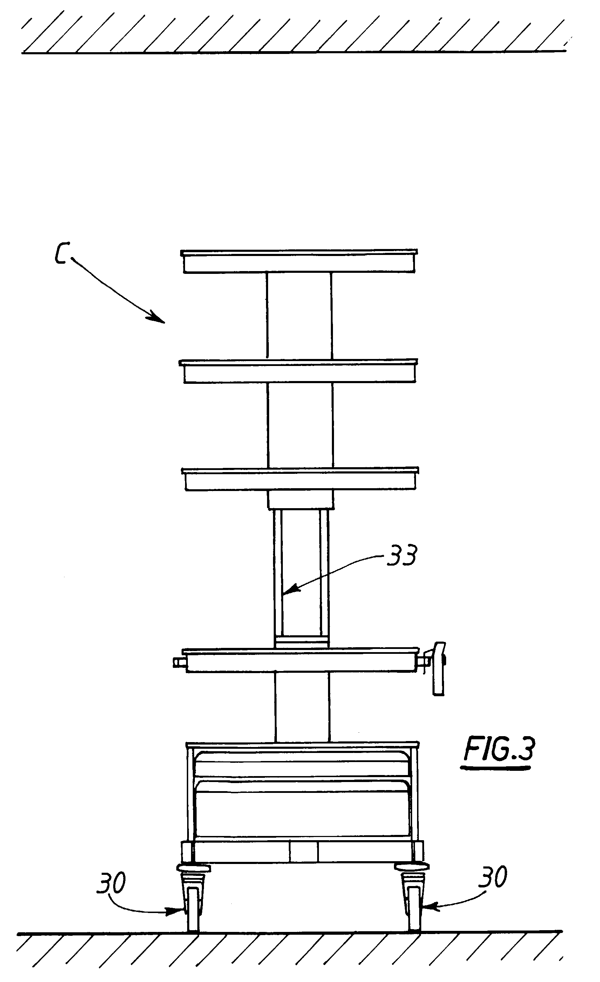

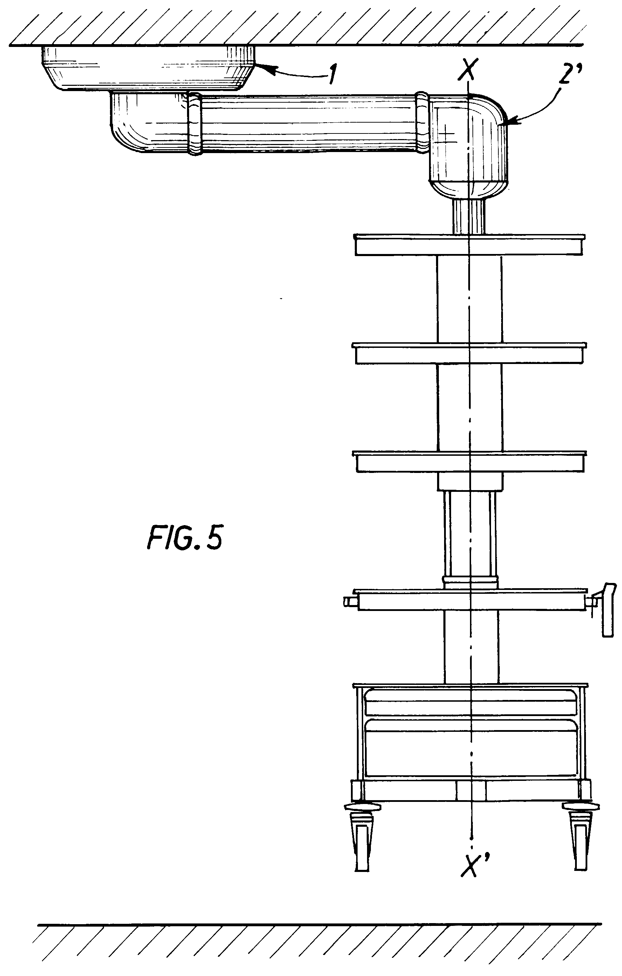

En outre, la figure 3 représente le chariot C de la figure 2 en vue de face, avant sa fixation sur la colonne 3, alors que la figure 5 représente le chariot, également en vue de face, après son arrimage sur la colonne, ainsi que représenté sur la figure 4.

On voit nettement, sur les figures 4 et 5, qu'une fois que le chariot de transport est arrimé à la colonne et levé, le chariot ne touche plus le sol 1" et, donc, que le déplacement du chariot peut être facilement réalisé par simple déplacement du bras 2 et/ou de la colonne 3 du statif de plafond S.

En outre, on constate également, en comparant les figures 2 et 4, que sur la figure 4, la sous-partie 55b a une longueur L' inférieure à la longueur L de celle-ci sur la figure 2.

En effet, la figure 4 représente le chariot après levage, donc dans une position où la sous-partie 55b s'est partiellement emboîtée par coulissement à l'intérieur de la sous-partie 55a, ainsi qu'expliqué ci-avant.

## Revendications

1. Ensemble structure-porteuse/chariot de transport comprenant:
- une structure-porteuse (S) comprenant au moins un bras (2) muni d'au moins une colonne (3) d'axe vertical (x-x') et des moyens de fixation (1) permettant la fixation de ladite structure (S) à un plafond (1') ou à un mur,
- un chariot (C) mobile de transport,
- des moyens d'accrochage (31) portés par ledit chariot (C) coopérant avec des moyens de réception (32) portés par ladite colonne (3) et susceptibles de permettre une fixation du chariot (C) à ladite colonne (3), et
- des moyens de levage (33) portés par ledit chariot (C) susceptibles de permettre au moins un levage d'au moins une partie dudit chariot (C) après fixation dudit chariot (C) à la colonne (3).

2. Ensemble selon la revendication 1, caractérisé en ce que les moyens de levage (33) comprennent une colonne-chariot (55) comportant au moins deux sous-parties (55a, 55b) susceptibles de s'emboîter et de coulisser l'une dans l'autre selon un mouvement de translation, de préférence un mouvement de translation sensiblement vertical.

3. Ensemble selon l'une des revendications 1 ou 2, caractérisé en ce que le levage du chariot (C) est opéré au moyen d'un moteur électrique dont le mouvement de rotation est transformé en mouvement de translation par système de conversion, de préférence un système vis/écrou.

4. Ensemble selon la revendication 3, caractérisé en ce que le moteur électrique est porté par le chariot (C).

5. Ensemble selon l'une des revendications 1 à 4, caractérisé en ce que le chariot comprend, en outre, des moyens de maintien (42) agencés sur la colonne-chariot (55) permettant de maintenir le chariot (C) en appui contre la colonne (3) au moins lorsque le chariot (C) est fixé à ladite colonne (3) et est soulevé du sol.

6. Ensemble selon la revendication 5, caractérisé en ce que la colonne (3) est sensiblement cylindrique et en ce que les moyens de maintien (42) sont pourvus d'une surface d'appui (43) venant en contact avec la colonne (3).

7. Ensemble selon l'une des revendications 1 à 6, caractérisé en ce que les moyens d'accrochage (31) comportent au moins un crochet (60) d'accrochage, de préférence au moins deux crochets (60) d'accrochage.

8. Ensemble selon l'une des revendications 1 à 7, caractérisé en ce que les moyens de réception (32) fixés à la colonne (3) comprennent au moins une, de préférence, au moins deux broches d'accrochage (61), au moins une broche d'accrochage (61) étant susceptible de coopérer avec au moins un crochet (60) porté par ledit chariot (C), préférentiellement au moins deux broches d'accrochage (61) rotatives.

9. Chariot de transport (C) mobile susceptible d'équiper un ensemble selon l'une des revendications 1 à 8, caractérisé en ce qu'il comporte des roulettes (30) permettant le déplacement dudit chariot sur le sol, des moyens d'accrochage (31) susceptibles de permettre la fixation du chariot (C) à une colonne (3) d'une structure d'accrochage (S) et des moyens de levage (33) susceptible de soulever au moins une partie dudit chariot, lorsque ledit chariot (C) est fixé à une colonne (3).

10. Procédé pour fixer un chariot selon la revendication 9 à une structure porteuse (S) comprenant au moins un bras (2) muni d'au moins une colonne (3) d'axe vertical (x-x') et des moyens de fixation (1) permettant la fixation de ladite structure porteuse(S) à un plafond (1') ou à un mur, dans lequel :
- on amène le chariot de transport (C) mobile au contact ou à proximité immédiate de la colonne (3),
- on fixe les moyens d'accrochage (31) portés par ledit chariot à des moyens de réception (32) agencés sur ladite colonne (3), de manière à faire coopérer les moyens d'accrochage (31) avec lesdits moyens de réception (32),
- on opère un levage d'au moins une partie du chariot (C) par actionnement de moyens de levage (33), de manière à soulever au moins une partie dudit chariot (C).

11. Utilisation d'un ensemble structure porteuse/chariot selon l'une des revendications 1 à 8 dans un bâtiment hospitalier, de préférence dans une salle de soins.
